# EUROPÄISCHE PATENTANMELDUNG

(11) **EP 2 330 002 A2**
(43) Veröffentlichungstag der Anmeldung: **08.06.2011**
(21) Anmeldenummer: 10187833.8
(22) Anmeldetag: 18.10.2010
(51) Int. Cl.: B60S 1/08, B60Q 1/00

(54) **Lichtleitkörper und Regensensor mit Lichtleitkörper**

(30) Priorität: 03.12.2009 DE 102009047428
(71) Anmelder: Robert Bosch GmbH, 70442 Stuttgart (DE)
(72) Erfinder: Pack, Andreas, 67500, Hagenau (FR); Schwarz, Axel, 76530, Baden-Baden (DE); Weber, Didier, 67880, Krautergersheim (FR); Hodapp, Bruno, 77855, Achern-Oensbach (DE); Feiler, Wolfgang, 72766, Reutlingen (DE); Wolff, Markus, 72555, Metzingen (DE); Hog, Norbert, 77767, Appenweier (DE)

(57) **Zusammenfassung**

Es wird ein Lichtleitkörper 100; 300A; 300B für eine Sensoreinrichtung zur richtungsabhängigen Erfassung einer Umgebungshelligkeit bei einem Kraftfahrzeug mit einer Scheibe, beschrieben. Der Lichtleitkörper enthält einem transparenten Körper mit einer Lichteintrittsfläche 101, die ausgebildet ist der Scheibe zugewandt zu sein, wobei eine Flächennormale der Lichteintrittsfläche eine Hauptrichtung definiert, und mit einem sich im Wesentlichen entlang der Hauptrichtung von der Lichteintrittsfläche erstreckenden Lichtleitkorpus mit zumindest zwei Lichtaustrittsflächen, wobei eine erste Lichtaustrittsfläche 116, 414 der zumindest zwei Lichtaustrittsflächen eine ebene, gegenüber der Lichteintrittsfläche schräg gestellte Fläche ist, und eine zweite Lichtaustrittsfläche 112 der zumindest zwei Lichtaustrittsflächen eine gekrümmte Fläche ist, die als Fortsetzung einer Seitenfläche des Lichtleitkorpus gebildet ist.

## Beschreibung

Die Erfindung betrifft einen Lichtleitkörper für eine Sensoreinrichtung zur richtungsabhängigen Erfassung einer Umgebungshelligkeit und eine Sensoreinrichtung mit einem Lichtleitkörper. Insbesondere betrifft die Erfindung einen Regensensor mit einem Lichtleitkörper, z.B. für eine Lichtsteuerung.

### Stand der Technik

In der Automobilindustrie werden heutzutage bei Kraftfahrzeugen oftmals Scheibenwischervorrichtungen verwendet, die nicht nur über eine entsprechendes Bedienelement im Innenraum des Kraftfahrzeugs gesteuert werden, sondern zusätzlich über einen Regensensor, der typischerweise als eine optische Sensoreinrichtung ausgebildet ist. Dieser Regensensor kann zum Beispiel an der Windschutzscheibe eines Kraftfahrzeugs angebracht sein.

Um den Fahrzeugführer eines Kraftfahrzeugs weiter zu entlasten beziehungsweise ihm einen noch größeren Komfort zu bieten, gibt es darüber hinaus in modernen Kraftfahrzeugen eine Lichtsteuerung zur Steuerung des Abblendlichts.

Der Regensensor kann typischerweise eine Lichtquelle beinhalten, deren Strahlung von der Windschutzscheibe je nach Feuchtigkeitsbelag auf der Scheibe unterschiedlich reflektiert wird. Durch Detektion des reflektierten Anteils des Lichts, z.B. IR Strahlung, kann ein Ausgangssignal des Regensensors zur Verfügung gestellt werden, das mit dem Feuchtigkeitsbelag auf der Windschutzscheibe korreliert. Für gute Ergebnisse kann die Empfindlichkeit eines solchen Regensensors automatisch eingestellt werden. Dies kann z.B. ebenfalls durch eine Messung der Umgebungshelligkeit, wie sie zur Steuerung des Abblendlichts verwendet wird, geschehen.

Für eine Steuerung des Abblendlichts, eine so genannte Lichtsteuerung, wird typischerweise die Umgebungshelligkeit gemessen. Hierbei kann, um verschiedene Ereignisse wie die Änderung der generellen Umgebungshelligkeit, Tunnelfahrten, Brückenfahrten oder ähnliches unterscheiden zu können, eine richtungsabhängige Messung der Umgebungshelligkeit erfolgen. Die Umgebungshelligkeit kann mit einem Richtungssensor zur Erfassung der Helligkeit in Fahrtrichtung und einem Globalsensor zur Erfassung der Umgebungshelligkeit im Allgemeinen, z.B. im Halbraum der Windschutzscheibe, zur Verfügung gestellt werden.

Typischerweise werden hierzu unterschiedliche, separate Linsen getrennt voneinander auf einer Platine an einer getrennten Position der Platine derart angebracht, dass ein Übersprechen von globaler Helligkeit und Helligkeit aus Fahrtrichtung vermieden wird. Diese Trennung führt jedoch zu konstruktiven Nachteilen, z.B. einem mindestens erforderlichen Bauraum.

### Offenbarung der Erfindung

Die Aufgabe der Erfindung besteht darin die oben genannten Probleme zumindest teilweise zu lösen und den für eine richtungsabhängige Erfassung einer Umgebungshelligkeit benötigten Bauraum zu verringern.

Gemäß einer Ausführungsform wird ein Lichtleitkörper für eine Sensoreinrichtung zur richtungsabhängigen Erfassung einer Umgebungshelligkeit bei einem Kraftfahrzeug mit einer Scheibe zur Verfügung gestellt. Der Lichtleitkörper beinhaltet einen transparenten Körper mit einer Lichteintrittsfläche, die ausgebildet ist der Scheibe zugewandt zu sein, wobei eine Flächennormale der Lichteintrittsfläche eine Hauptrichtung definiert, und mit einem sich im wesentlichen entlang der Hauptrichtung von der Lichteintrittsfläche erstreckenden Lichtleitkorpus mit zumindest zwei Lichtaustrittsflächen, wobei eine erste Lichtaustrittsfläche der zumindest zwei Lichtaustrittsflächen eine ebene, gegenüber der Lichteintrittsfläche schräg gestellte Fläche ist, und eine zweite Lichtaustrittsfläche der zumindest zwei Lichtaustrittsflächen eine gekrümmte Fläche ist, die als Fortsetzung einer Seitenfläche des Lichtleitkorpus gebildet ist.

Gemäß einer weiteren Ausführungsform wird eine Sensoreinrichtung, insbesondere ein Regensensor, mit Lichtsteuerung zur richtungsabhängigen Erfassung der Umgebungshelligkeit in zumindest zwei Richtungen eines Kraftfahrzeugs mit einer Scheibe zur Verfügung gestellt. Diese umfasst einen Lichtleitkörper mit einem transparenten Körper mit einer Lichteintrittsfläche, die ausgebildet ist der Scheibe zugewandt zu sein, wobei eine Flächennormale der Lichteintrittsfläche eine Hauptrichtung definiert, und mit einem sich im wesentlichen entlang der Hauptrichtung von der Lichteintrittsfläche erstreckenden Lichtleitkorpus mit zumindest zwei Lichtaustrittsflächen, wobei eine erste Lichtaustrittsfläche der zumindest zwei Lichtaustrittsflächen eine ebene, gegenüber der Lichteintrittsfläche schräg gestellte Fläche ist, und eine zweite Lichtaustrittsfläche der zumindest zwei Lichtaustrittsflächen eine gekrümmte Fläche ist, die als Fortsetzung einer Seitenfläche des Lichtleitkorpus gebildet ist.

Bevorzugte Ausführungsformen und besondere Aspekte der Erfindung ergeben sich aus den Unteransprüchen, in den Zeichnungen und der beiliegenden Beschreibung.

### Vorteile der Erfindung

Durch die hier beschriebenen Ausführungsformen gemäß der vorliegenden Erfindung kann der für eine richtungsabhängige Erfassung der Umgebungshelligkeit benötigte Bauraum durch integrales Ausbilden einer Globalsensoroptik und einer Richtungssensoroptik in einem kombinierten Lichtleitkörper, beziehungsweise einer Kombilinse, zur Verfügung gestellt werden.

Zum einen kann hierdurch das System aus Regensensor und Lichtsensor kompakt aufgebaut werden, was zu einer Platzersparnis führt. Zum anderen kann der durch den Regensensor abgedeckte Teil der Windschutzscheibe verkleinert werden, und hierdurch z.B. auch ein schöneres Design für einen Regensensor mit Lichtsteuerung gewählt werden.

Ausführungsformen die Erfindung stellen hierzu einen Lichtleitkörper, das heißt einen einzigen Lichtleitkörper, zur Verfügung, der sowohl die Lichtleitung für den so genannten Richtungssensor, das heißt der Umgebungshelligkeit in Fahrtrichtung, als auch die Lichtleitung für den Globalsensor, das heißt der Umgebungshelligkeit in einem oberhalb der Fahrtrichtung definierten Halbraum der Windschutzscheibe, ermöglicht. Der Lichtleitkörper beinhaltet eine gekrümmte Fläche und zumindest eine, gemäß insbesondere bevorzugten Ausführungsformen mindestens zwei Ebenen schräg gestellten Flächen. Durch die Ebenheit der Austrittfläche, beziehungsweise deren Orientierung im Verhältnis zu einer Lichteintrittfläche, wird das aus dem Lichtleitkörper austretende Licht in Abhängigkeit vom Einfallswinkel aufgespreizt, was eine Winkelselektion zwischen Richtungssensor und Globalsensor erleichtert. Weiterhin wird innerhalb des Lichtleitkörpers durch die ebenen Flächen ein großer Teil des unerwünschten Lichts vollständig reflektiert (TotalReflexion) und in Richtung der gekrümmten Oberfläche gelenkt. Das Licht tritt an der gekrümmten Oberfläche aus und kann durch eine Abdeckung, eine Blende oder eine andere Blockierung des ausgetretenen Lichts vollständig eliminiert werden. Hierdurch wird die Messung des Globalsensors und des Richtungssensors durch die Verringerung von Streulicht verbessert.

Gemäß weiteren typischen bevorzugten Ausführungsformen beinhaltet der Lichtleitkorpus eine ebene, gegenüber der Lichteintrittsfläche schräg gestellte dritte Lichtaustrittsfläche. Hierdurch können Winkelbereiche mit einer Aufspreizung detektiert werden. Typischerweise sind in einem solchen Fall die Flächen so angeordnet, dass die erste Lichtaustrittsfläche eine erste Flächennormale hat, und die dritte Lichtaustrittsfläche eine dritte Flächennormale hat, und wobei die erste Flächennormale gegenüber der Hauptrichtung weiter geneigt ist als die dritte Flächennormale gegenüber der Hauptrichtung.

Gemäß einer noch weiteren bevorzugten Ausführungsform beinhaltet der Lichtleitkorpus weiterhin eine ebene, gegenüber der Lichteintrittsfläche schräg gestellte vierte Lichtaustrittsfläche. Hierdurch können noch weitere Bereiche mit einer starken Aufspreizung detektiert werden. Dies kann zum Beispiel ein Nahfeldsensor sein.

Für die Sensoreinrichtung der hier beschriebenen bevorzugten Ausführungsformen kann die erste Lichtaustrittsfläche geneigt sein, um die Umgebungshelligkeit in Fahrtrichtung des Kraftfahrzeugs zu erfassen, und die dritte Lichtaustrittsfläche kann geneigt sein, um die Umgebungshelligkeit aus einer gegenüber der Fahrtrichtung nach oben geneigten Richtung zu erfassen.

Typischerweise beinhalten die Sensoreinheiten gemäß Ausführungsformen optional weiterhin eine erste Lichtstrahlbegrenzung mit einer ersten Aperturöffnung zum Begrenzen des die erste Lichtaustrittsfläche verlassenden Lichts, eine zweite Lichtstrahlbegrenzung korrespondierend zur zweiten Lichtaustrittsöffnung, und eine dritte Lichtstrahlbegrenzung mit einer dritten Aperturöffnung zum Begrenzen des die dritte Lichtaustrittsfläche verlassenden Lichts. Die zweite Lichtstrahlbegrenzung kann eine Streulicht eliminierende Strahlbegrenzung sein. Oder die zweite Lichtaustrittsfläche kann angeordnet sein, um die Umgebungshelligkeit aus einer Richtung mit einer Richtungskomponente entgegen der Fahrtrichtung des Kraftfahrzeugs zu erfassen, wobei die zweite Lichtstrahlbegrenzung eine zweite Aperturöffnung zum Begrenzen des die zweite Lichtaustrittsfläche verlassenden Lichts aufweist.

### Kurze Beschreibung der Zeichnungen

Ausführungsbeispiele der Erfindung sind in den Figuren dargestellt und werden im Folgenden näher beschrieben. Es zeigen:
Figuren 1A und 1 B eine schematische Darstellung eines Lichtleitkörpers gemäß Ausführungsformen der Erfindung, wobei Figur 1A eine perspektivische Darstellung und Figur 1 B einen Querschnitt des Lichtleitkörpers zeigt;
Figur 2 einen an einer Scheibe eines Kraftfahrzeugs montierte Sensoreinrichtung gemäß Ausführungsformen der vorliegenden Erfindung mit einem entsprechenden Lichtleitkörper;
Figuren 3A und 3B eine schematische Darstellung eines Lichtleitkörpers gemäß weiteren Ausführungsformen der Erfindung;
Figuren 4A und 4B eine schematische Darstellung eines Lichtleitkörpers gemäß noch weiteren Ausführungsformen der Erfindung, und entsprechende Blenden mit Aperturöffnungen für das durch die Lichtaustrittsflächen austretende Licht beziehungsweise ein optisches Abschottungselement für Streulicht; und
Figur 5 eine an einer Scheibe eines Kraftfahrzeugs montierte Sensoreinrichtung gemäß weiteren Ausführungsformen der vorliegenden Erfindung mit einem entsprechenden Lichtleitkörper.

### Ausführungsformen der Erfindung

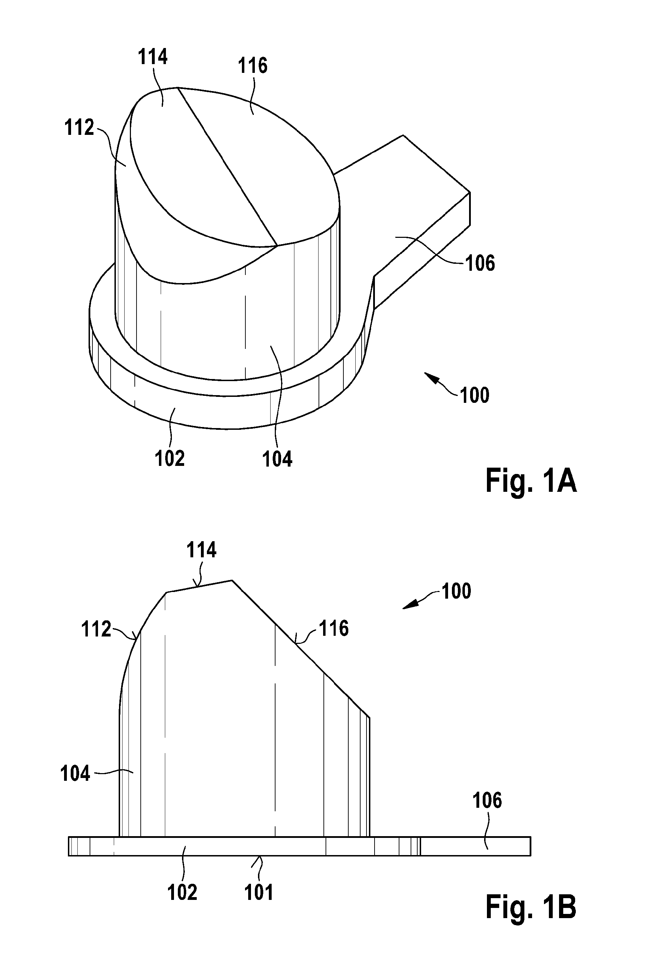

Die Figuren 1A und 1 B zeigen einen Lichtleitkörper 100, bzw. eine Kombilinse. Der Lichtleitkörper 100 hat eine Basis 102 mit einer Lichteintrittfläche 101. Die Basis 102 weist ferner einen Vorsprung 106 auf, der zum Beispiel dafür verwendet werden kann, den Lichtleitkörper 100 in einer entsprechenden Halterung zu lagern. Im Wesentlichen parallel zur Flächennormale der Lichteintrittfläche 101 erstreckt sich der Lichtleitkörper mit einem Korpus 104, der in den Figuren 1A und 1 B die Grundform eines Kreiszylinders hat. Gemäß weiteren, bevorzugten Ausführungsformen kann der Grundkörper auch eine zylindrische Form mit einer anderen geometrischen Form als Grundfläche haben. Weiterhin weist der Lichtleitkörper 100 die Lichtaustrittsflächen 112, 114 und 116 auf. Die Lichtaustrittsfläche 112 ist eine gekrümmte Fläche, während die Lichtaustrittsflächen 114 und 116 ebene Flächen sind. Hierbei ist die Flächennormale der Lichtaustrittsfläche 114 gegenüber der Flächennormalen der Lichteintrittfläche 101 weniger geneigt als die Flächennormale der Lichtaustrittsfläche 116 gegenüber der Flächennormalen der Lichteintrittfläche 101.

Der Lichtleitkörper 100 stellt einen transparenten Körper zur Verfügung, das heißt einen einzigen transparenten Körper zur Verfügung, der die Lichtstrahlen zur Messung der Umgebungshelligkeit für einen Richtungssensor und einen Globalsensor leitet. Daher ist der Lichtleitkörper typischerweise im sichtbaren Wellenlängenbereich transparent, um die Umgebungshelligkeit auf einen entsprechenden Detektor lenken zu können. Gemäß weiteren, insbesondere bevorzugten Ausführungsformen ist der Lichtleitkörper auch in einem Infrarot Wellenlängenbereich von z.B. 780 nm bis 3000 nm transparent, um die Strahlung eines Regensensors leiten zu können.

Durch die Ebenheit der Austrittflächen 114 und 116 wird das aus dem Lichtleitkörper 100 austretende Licht in Abhängigkeit vom Einfallswinkel an einer Scheibe eines Kraftfahrzeugs, beziehungsweise an der Lichteintrittfläche 101 besonders stark aufgespreizt, wodurch eine Winkelselektion für die richtungsabhängige Erfassung des Umgebungslichts erleichtert wird. Unerwünschtes Licht, das heißt Licht aus unerwünschten Richtungen, wird an den ebenen Flächen 114 und 116 vollständig reflektiert, auf die gekrümmte Lichtaustrittsfläche 112 gelenkt, wo es den Lichtleitkörper verlässt. Dieses Streulicht kann an dieser Position durch ein entsprechendes optisches Element, das zum Beispiel mattiert sein kann, abgefangen und somit vollständig eliminiert werden.

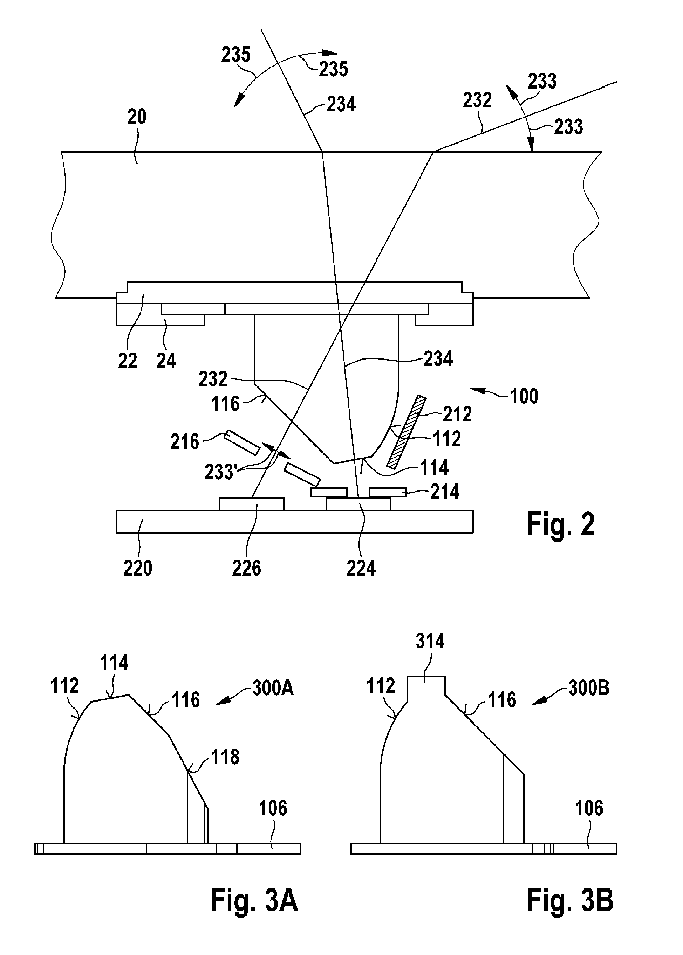

Figur 2 zeigt eine Sensoreinrichtung mit einem Lichtleitkörper 100, die an einer Glasscheibe 20, zum Beispiel einer Windschutzscheibe eines Kraftfahrzeugs montiert ist. Zwischen der Scheibe 20 und der Halterung 24 für den Lichtleitkörper 100 befindet sich ein Silikonkissen 22. Das Silikonkissen kann zum Beispiel zu einer vordefinierten Aufnahme der Lichteintrittfläche führen und einen optisch vordefinierten Weg zwischen der Scheibe 20 und dem Lichtleitkörper 100 zur Verfügung stellen. Der Lichtleitkörper 100 weist die in Bezug auf die Figuren 1A und 1B genannten Lichtaustrittsflächen 112, 114 unter 116 auf. Das austretende Licht wird mit Sensoren 224 und 226 erfasst. Die Sensoren 224 und 226 sind auf einer Platine, zum Beispiel zusammen mit der entsprechenden zugehören Elektronik, aufgebracht. Die Sensoren können zum Beispiel Fotodioden oder Fototransistoren sein.

Die Scheibe 20 ist in Figur 2 horizontal dargestellt. Bei der Verwendung für eine Windschutzscheibe eines Kraftfahrzeugs ist die Scheibe jedoch typischerweise geneigt. Ein entsprechender Winkel kann zwischen 20° und 30°, z.B. 25° sein. Figur 2 zeigt exemplarisch zwei Lichtstrahlen 232 und 234. Die Richtungen aus denen die Lichtstrahlen 232 und 234 kommen, entsprechen in Figur 2 den Hauptrichtungen bzw. Hauptnutzlichtstrahl, für den Richtungssensor und den Globalsensor. Bei einer geneigten Windschutzscheibe, die zum Beispiel um 25° geneigt sein kann, entspricht der Lichtstrahl 232 einem horizontalen Lichtstrahl, das heißt einem Lichtstrahl aus Fahrtrichtung des Kraftfahrzeugs. Der Lichtstrahl 234, der gegenüber dem Lichtstrahl 232 einen Winkel von z.B. 70° bis 110° aufweisen kann, entspricht somit einem Lichtstrahl für die Messung der Umgebungshelligkeit aus einem Bereich, der sich oberhalb der Fahrtrichtung befindet. Der beispielhaft dargestellte Lichtstrahl 234 kann z.B. ein zur Fahrtrichtung vertikaler Lichtstrahl sein.

Der Lichtstrahl 232 tritt in die Scheibe 21 ein und gelangt von dort über die Lichteintrittfläche des Lichtleitkörpers 100 zur Lichtaustrittsfläche 116, um auf dem Lichterfassungselement, d.h. Sensor 226 detektiert zu werden. Wie durch die Pfeile 233 illustriert, existiert ein Winkelbereich von Lichtstrahlen ausgehend von und um den Hauptnutzstrahl 232, der durch den Detektor 226 detektiert werden kann. Eine Blende 216 mit einer Aperturöffnung begrenzt hierbei den Winkelbereich weiter. Die korrespondierenden Winkel in der Nähe der Blendenebene werden durch die Pfeile 233' illustriert.

Gemäß weiteren bevorzugten Ausführungsformen kann ein typischer Winkelbereich um den Hauptnutzstrahl 232 in einem Bereich von +- 20° bis +-30° liegen. Dieser Winkelbereich für den Richtungssensor kann hierbei so gewählt werden, dass er mit einem Winkelbereich für den Globalsensor nicht überlappt. Dies ist exemplarisch durch die gestrichelte Linie in Figur 2 dargestellt. Analog zum Hauptnutzstrahl 232 für den Richtungssensor gibt es einen Hauptnutzstrahl 234 für den Globalsensor. Das Licht, das beispielhaft durch den Strahl 234 dargestellt ist, tritt in die Scheibe 20 ein und wird über die Lichteintrittfläche 101 des Lichtleitkörpers 100 und die Lichtaustrittsfläche 114 des Lichtleitkörpers 100 auf den Detektor 224 gelenkt. Auch hier existiert ein Winkelbereich für die zu messenden Lichtstrahlen, der durch die Pfeile 235 illustriert ist. Gemäß bevorzugten Ausführungsformen kann auch der Winkelbereich des Globalsensors in einem Bereich von z.B. +-20° bis +-30° liegen. Optional kann durch eine entsprechende Anordnung der Blenden auch eine asymmetrische Anordnung der Winkelbereich eingestellt werden.

Gemäß den in Figur 2 dargestellten Ausführungsformen werden der Öffnungswinkel 233 und die Richtung des Hauptnutzstrahls 232 für den Richtungssensor durch den Winkel der Lichtaustrittsfläche 116 und die Öffnung der Blende 216 eingestellt. Analog wird der Öffnungswinkel 235 und die Richtung des Hauptnutzstrahls 234 für den Globalsensor durch die Schräge der Lichtaustrittsfläche 114 und die Öffnung der Blende 214 eingestellt. Lichtstrahlen, die nicht in einem der eingestellten Öffnungswinkel zu einem Detektor gelangen, können an den ebenen Flächen total reflektiert werden und durch die konvex gewölbte Lichtaustrittsfläche 112 weggebrochen werden. Das an der Fläche 112 austretende Licht, das nicht zu einer Messung verwendet werden soll, kann z.B. durch einen entsprechenden Lichtstrahl-stopp 212 geblockt werden, so dass Photonen des durch die Fläche 112 austretenden Lichts nicht auf einen der Detektoren 224 oder 226 gelangen. Für die totale Reflektion in Bezug auf Lichtstrahlen für den Globalsensor dient zum Beispiel die ebene Fläche 116.

Weitere bevorzugte Ausführungsformen von Lichtleitkörpern werden in Bezug auf die folgenden Figuren 3A bis 4B besprochen. Der Lichtleitkörper 300A, wie er in Figur 3A dargestellt ist, beinhaltet neben den Lichtaustrittsflächen 112, 114 und 116, die oben beschrieben wurden, eine weitere Lichtaustrittsfläche 118. Die Lichtaustrittsfläche 118 ist eine ebene Lichtaustrittsfläche, deren Flächennormale in Bezug auf die Flächennormale der Lichteintrittfläche noch weiter geneigt ist. Wird in einem Kraftfahrzeug z.B. ein Headup-Display verwendet, so werden dem Fahrzeugführer die entsprechenden Displaydaten in eine Ebene projiziert, die sich wenige Meter vor der Windschutzscheibe befindet. Als Hintergrund für diese Displayinformationen dient dann der sich vor dem Fahrzeug befindliche Fahrbahnbelag. Dieser Fahrbahnbelag kann jedoch als Hintergrund durch seine unterschiedliche Farbgebung oder durch seine unterschiedlichen Grautöne einen unterschiedlichen Kontrast bilden. Um für ein Headup-Display eine Anzeige mit einem guten Kontrast zur Verfügung zu stellen, kann daher zum Beispiel optisch gemessen werden, ob es sich bei dem Fahrbahnbelag derzeit um einen sehr dunklen oder einen sehr hellen Fahrbahnbelag handelt. Entsprechende Abstufungen können durch die optischen Messtechniken ebenfalls gemessen werden.

Für die Messung des Lichts, das aus Richtung des Fahrbahnbelags stammt, wird typischerweise ein so genannter Nahfeldsensor verwendet. Die ebene Lichtaustrittsfläche 118 des Lichtleitkörpers 300A stellt gemäß einer bevorzugten Ausführungsform eine entsprechend geneigte Fläche zur Verfügung. Wie im Zusammenhang mit Figur 2 zu erkennen ist, wird durch die Fläche 118 ein Hauptnutzpfad beziehungsweise ein Einfallswinkel in Bezug auf eine Scheibe derart festgelegt, dass ein Messfeldbereich detektiert werden kann, der im Vergleich zur Fahrtrichtung nach unten geneigt ist. Gemäß einer noch weiteren, optionalen Ausführungsform kann der Korpus des Lichtleitkörpers auch in Richtung des Vorsprungs 106 weiter ausgedehnt werden, um die entsprechende Fläche als Lichteintrittfläche für den Nahfeldsensor zu nutzen.

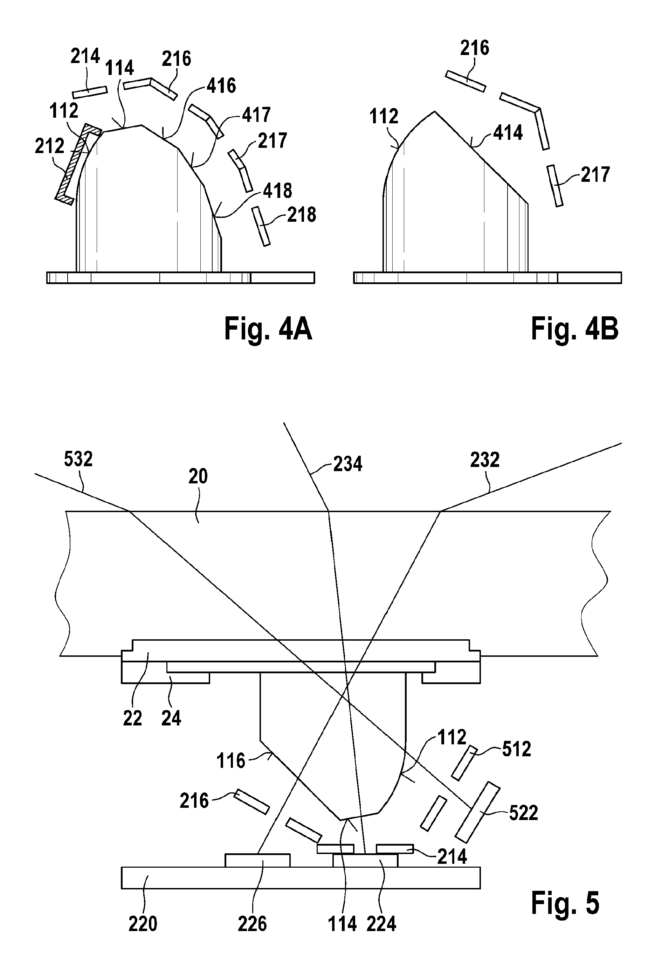

Der Nahfeldsensor würde in Figur 2 einem Hauptlichtstrahl entsprechen, der mit einem flacheren Winkel auf die Scheibe trifft, als der Lichtstrahl des (horizontalen) Hauptnutzstrahls 232. Daher kann gemäß typischen, bevorzugten Ausführungsformen ein Nahfeldsensor den Fahrbahnbelag des Bodens ca. 10 bis 15 m vor dem Kraftfahrzeug messen. In Figur 4A ist dies mit einer weiteren Blende 217 bzw. 218 illustriert. Diese bevorzugte Ausführungsform zeigt beispielhaft noch weitere Lichtsaustrittsflächen 416, 417, und 418. Optional können, um einen eventuell vorhandenen Überlapp zwischen z.B. einem Nahfeldsensor und dem in Fahrtrichtung gerichteten Richtungssensors zu reduzieren oder zu vermeiden, die korrespondierenden Blenden modifiziert werden, so dass kleinere Aperturöffnungen zur Verfügung gestellt werden. In Abhängigkeit der Anzahl der Austrittflächen und der Anzahl der entsprechenden Detektionsrichtungen kann andererseits auch ein geringer Überlapp von circa 10 % bis 20% als akzeptabel eingestuft werden. Insbesondere wenn hierdurch eine zusätzliche Information wie z.B. das oben beschriebene Nahfeld erfasst werden kann.

Ferner ist es gemäß weiteren, insbesondere bevorzugten Ausführungsformen möglich, dass zusätzliche schräge Ebenen oder mehrere schräge Ebenen zur Verfügung gestellt werden, um unterschiedliche Detektionsbereiche mit entsprechenden funktionalen Zusammenhängen zur Verfügung zu stellen. Figur 3B zeigt eine weitere Ausführungsform eines Lichtleitkörpers 300B. Hierbei ist die ebene Fläche 314, die die Lichtaustrittsfläche für den Globalsensor zur Verfügung stellt, durch einen Vorsprung von der Lichtaustrittsfläche 116 und der Lichtaustrittsfläche 112 abgehoben, z.B. als zylindrische Nase. Hierdurch wird die Lichtführung für das Nahfeld verbessert. Eine Selektion des Winkelbereichs kann weiter erleichtert werden. Dies kann unter anderem dadurch erzielt werden, dass die Blenden mit den entsprechenden Aperturöffnungen in unterschiedlichen Ebenen hinter den Lichtaustrittsfläche zur Verfügung gestellt werden. Zum Beispiel kann ein Eliminieren von Streulicht im Richtungssensorbereich bereits an einer Position erfolgen, bei dem die zum Globalsensor gelenkten Lichtstrahlen noch innerhalb des Lichtleitkörpers verlaufen.

Figur 4B zeigt eine weitere Ausführungsform für einen Lichtleitkörper. Hierbei wird eine konvex geformte Lichtaustrittsfläche 112 und eine ebene, im Verhältnis zur Lichteintrittfläche geneigten Lichtaustrittsfläche 414 zur Verfügung gestellt. Durch die Ebenheit der Austrittflächen wird auch hier das Licht aufgespreizt, so dass es durch Blenden 216 und 217 mit unterschiedlichen Aperturöffnungen für die unterschiedlichen Winkelbereiche selektiert werden kann. Eine zusätzliche Aufspaltung durch unterschiedliche Neigung der Flächen, wie sie in den Ausführungsformen gemäß Figuren 1A, 1B, 3A, 3B und 4A dargestellt ist, tritt hier jedoch nicht auf.

Figur 5 illustriert eine weitere Ausführungsform für eine Sensoreinrichtung. Ferner zu den in Bezug auf Figur 2 beschriebenen Merkmalen, Ausführungsbeispielen und Details, ist das Licht-Blockierungselement 212 in Figur 5 durch eine weitere Blende 512 mit einer Aperturöffnung ersetzt. Hinter der entsprechenden Aperturöffnung befindet sich ein weiterer Detektor 522 zur Erkennung von Lichtstrahlen wie sie beispielhaft durch den Hauptnutzstrahl 532 dargestellt sind. Der Lichtstrahl 532 entspricht hierbei einem Hauptnutzstrahl der bei einer um 25° geneigten Scheibe eine Richtungskomponente hat, die nach hinten gerichtet ist, das heißt entgegen der Fahrtrichtung. Somit kann durch die Blende 512 und den Detektor 522, die korrespondierend zur Lichtaustrittsfläche 112 angeordnet sind, Licht auch entgegen der Fahrtrichtung ausgewertet werden, was zum Beispiel beim Einfahren in einen Tunnel von Vorteil sein kann. Die Tatsache das auch das innerhalb des Lichtleitkörpers total reflektierte Licht aus anderen Richtungen teilweise durch die Lichtaustrittsfläche 112 den Lichtleitkörper verlassen kann, kann gemäß einer optionalen Ausführungsform z.B. dadurch kompensiert werden, dass die am Detektor 522 detektierte Intensität des Lichts durch eine entsprechende Auswertung und/oder Normierungen in Bezug auf das durch die Detektoren 224 und/oder 226 detektierte Licht umgerechnet wird, um das Streulicht in einer Auswertung zu berücksichtigen. Zusätzlich oder alternative kann für eine Korrekturmessung auch ein weitere Detektor zur Verfügung gestellt werden.

## Patentansprüche

1. Lichtleitkörper (100; 300A; 300B) für eine Sensoreinrichtung zur richtungsabhängigen Erfassung einer Umgebungshelligkeit bei einem Kraftfahrzeug mit einer Scheibe (20), umfassend:
einen transparenten Körper mit einer Lichteintrittsfläche (101), die ausgebildet ist der Scheibe zugewandt zu sein, wobei eine Flächennormale der Lichteintrittsfläche eine Hauptrichtung definiert, und mit einem sich im Wesentlichen entlang der Hauptrichtung von der Lichteintrittsfläche erstreckenden Lichtleitkorpus (104) mit zumindest zwei Lichtaustrittsflächen, wobei eine erste Lichtaustrittsfläche (116; 414; 416) der zumindest zwei Lichtaustrittsflächen eine ebene, gegenüber der Lichteintrittsfläche schräg gestellte Fläche ist, und eine zweite Lichtaustrittsfläche (112) der zumindest zwei Lichtaustrittsflächen eine gekrümmte Fläche ist, die als Fortsetzung einer Seitenfläche des Lichtleitkorpus gebildet ist.

2. Lichtleitkörper gemäß Anspruch 1, wobei der Lichtleitkorpus eine ebene, gegenüber der Lichteintrittsfläche schräg gestellte dritte Lichtaustrittsfläche (114) umfasst.

3. Lichtleitkörper gemäß Anspruch 2, wobei die erste Lichtaustrittsfläche eine erste Flächennormale hat und die dritte Lichtaustrittsfläche eine dritte Flächennormale hat, und wobei die erste Flächennormale gegenüber der Hauptrichtung weiter geneigt ist als die dritte Flächennormale gegenüber der Hauptrichtung.

4. Lichtleitkörper gemäß einem der Ansprüche 1 bis 3, wobei der Lichtleitkorpus eine ebene, gegenüber der Lichteintrittsfläche schräg gestellte vierte Lichtaustrittsfläche (118; 418) umfasst.

5. Sensoreinrichtung, insbesondere ein Regensensor, mit Lichtsteuerung zur richtungsabhängigen Erfassung der Umgebungshelligkeit in zumindest zwei Richtungen eines Kraftfahrzeugs mit einer Scheibe, umfassend:
einen Lichtleitkörper (100; 300A; 300B) gemäß einem der Ansprüche 1 bis 4.

6. Sensoreinrichtung gemäß Anspruch 5, wobei die erste Lichtaustrittsfläche (116) geneigt ist, um die Umgebungshelligkeit in Fahrtrichtung des Kraftfahrzeugs zu erfassen, und wobei die dritte Lichtaustrittsfläche (114) geneigt ist, um die Umgebungshelligkeit aus einer gegenüber der Fahrtrichtung nach oben geneigten Richtung zu erfassen.

7. Sensoreinrichtung gemäß einem der Ansprüche 5 bis 6, ferner umfassend:
eine erste Lichtstrahlbegrenzung (216) mit einer ersten Aperturöffnung zum Begrenzen des die erste Lichtaustrittsfläche verlassenden Lichts;
eine zweite Lichtstrahlbegrenzung (212; 512) korrespondierend zur zweiten Lichtaustrittsöffnung; und
eine dritte Lichtstrahlbegrenzung (214) mit einer dritten Aperturöffnung zum Begrenzen des die dritte Lichtaustrittsfläche verlassenden Lichts.

8. Sensoreinrichtung gemäß einem der Ansprüche 5 bis 7, wobei die zweite Lichtstrahlbegrenzung eine Streulicht eliminierende Strahlbegrenzung (212) ist.

9. Sensoreinrichtung gemäß einem der Ansprüche 5 bis 7, wobei die zweite Lichtaustrittsfläche angeordnet ist, um die Umgebungshelligkeit aus einer Richtung mit einer Richtungskomponente entgegen der Fahrtrichtung des Kraftfahrzeugs zu erfassen, und wobei die zweite Lichtstrahlbegrenzung eine zweite Blende (512) mit einer Aperturöffnung zum Begrenzen des die zweite Lichtaustrittsfläche verlassenden Lichts aufweist.
